# EUROPEAN PATENT APPLICATION

(11) **EP 3 831 471 A1**
(43) Date of publication of application: **09.06.2021**
(21) Application number: 20211432.8
(22) Date of filing: 03.12.2020
(51) Int. Cl.: B01J 2/20, B30B 11/22, A01K 1/015

(54) **GRANULATING EQUIPMENT FOR THE PRODUCTION OF ANIMAL BEDDING**

(30) Priority: 06.12.2019 CZ 20193697
(71) Applicant: Tommi CZ s.r.o., 39701 Pisek (CZ)
(72) Inventor: Karafiát, Tomá, 39701 Písek (CZ)
(74) Representative: Sedlák, Jirí

(57) **Abstract**

Granulating equipment for the production of animal bedding litter, consisting of a drive unit and a granulating press (7). The granulating press (7) consists of a press housing, a hopper for granulation material, a hopper for discharging the formed granules, a press head (4) mounted on a rotating drive shaft (8) of the drive unit and passing through the centre of a circular press die (6) with pressing holes. The press head (4) being provided with at least one rotatably mounted roller (5), where the roller (5) is rolling on the upper surface of the circular press die (6). In the space between the press head (4) and the press die (6) a sealing ring (1) is arranged, to eliminate penetration of pressed material into the space between the press die (6) and the press head (4).

## Description

### Field of the Invention

The invention relates to a device for the production of bedding with good absorption capacity for small domestic animals. For the production also waste products from industrial production can be used.

### Background of the Invention

In current technical practice the production process of granules is completely known and commonly used. The purpose of the production of granules is either compaction or materialization of small, often dust particles, into larger units, allowing first of all better dust-free handling and application. The second process, on the other hand, is to shrink larger products to smaller ones, also in order to simplify handling and application.

From the patent document HRP20100365 a method for processing waste from broiler farming for the production of granulated broiler fertilizer is known, whose properties, its treatment as well as applications to agricultural land make possible, to meet extremely precise, complex and strict environmental regulations and standards.

The patent document CN206078480 discloses a method for producing cat litter, where the granules have a triangular shape. This shape allows faster water absorption. The shape of the granules is achieved due to the shape of the screen of granulating equipment.

Cat litter as one of the main types of litter for pets is made of many different materials, and from material to material also the granulation technology and material preparation for the granulation process is different. From US patent document 5229348 a method using peanut hulls to produce such granules is known. From document US 6895896 we know a litter, where the granules contain a weight proportion of silica gel beads.

From the patent document US 2004112297 a granular litter is known, whose granules contain a mixture of several separate particles, each particle containing a mineral and an organic matter. Absorptive artificial grains consist of absorptive fibres, minerals and chemicals. Highly absorptive and lightweight litter significantly reduces odours, extends the period of use and increases user comfort.

For the production of granules, granulators or granulating devices, sometimes called only granulating presses are used. These, independently or in combination with mixing, grinding, crushing or similar equipment, have to pre-prepare and form the original mixture of granular substances and materials as well as to process the input material into resulting granular structure.
The main parts of the granulating equipment are drive unit and granulating press, situated either independently or separately in cabinets as their housing and located near the press, on places, being for example intended as working spaces for pressing and granulation. The granulation press assembly furthermore usually consists of a hopper for granular material, a hopper as output for the formed granules, a press head and a press die with press holes.
The press head is normally provided with rotational rollers, rolling along the upper surface of the press die, pressing the material to be processed and pushing it at the same time through the pressing holes. The bottom side of the press die can be provided with additional knives for dividing and separating the formed and pressed strands. The granulating press is manufactured in two basic variants, i.e. with a rotating press head and stationary press die, or in design with a stationary press head and a rotating press die. Depending on the type and consistency of the granulation mass, the presses are manufactured as low-speed or high-speed presses, often with a centrifugal granulating effect, replacing the press head.

A manufacturing process for the production of granular slag sand as well as a device for carrying out this process are known from the patent document CS275931. The patent document CZ306481 discloses a system for the production of clumping litter for cats and small animals from a silicate feedstock on the basis of centrifugal extrusion of the silicate feedstock through a perforated drum.

From the patent document CS166401 a press die with conically chamfered edges of pressing holes for a disc-shaped granulating press is known, on the surface of which a pressing cone rolls and extrudes the material through the holes in the die, forming granules of the desired shape. From the patent document CZ22493 a press die with downwards widening press holes for the production of ecological litter is known, where the resistance of the extruded granulation mixture gradually decreases, the compressed mixture can partially expand and the resulting granules are then less hard and absorb moisture better.

From the patent document CS 147990 a device for pressing feed granules with a disc-shaped press die is known, on which the pressing rollers roll. The matrix is stationary and is provided with granulating holes.
The rollers are rotatably mounted on a rotating press head and as they roll, they push the granulating material through the holes in the die. While doing so, the rolling surface for rollers is embedded in the die, what eliminates the tendency of the material to be extruded to the sides instead of through the holes.
The disadvantage of this solution is, that the space between the press head and the die is gradually filled with material and the subsequent friction causes heat, resulting in increased motor load.
The same disadvantages brings a solution according to the patent document CS 152522.

The purpose of the invention is to eliminate compression and deposition of the pressed material between the press head and the press die in places, where the extrusion of the pressed material does not take place and where the accumulation of material is undesirable.

### Summary of the Invention

The disadvantages of the known technical solutions are eliminated by a sealing ring, located in the space between the press head and the press die of the granulating press, which eliminates the penetration of the pressed material into the space between the press die and the press head.

Granulating equipment for the production of animal bedding usually contains a drive unit and a granulating press. The granulation press assembly usually consists of a press housing, a hopper for material to be granulated, a discharge hopper for formed granules, a press head and a press die with pressing holes. In the case of an arrangement with rotary press head, the press head is mounted on the upper end of the drive shaft of the drive unit, wherein this drive shaft passes through an opening in centre of the circular press die. In this design, the press die is stationary anchored in the press housing. Around its circumference the press head is provided with a roller or with rollers, rotatably mounted to this press head. During the circular rotational movement of the press head, the rollers are rolling on the upper surface of the circular press die.

In a preferred embodiment, the sealing ring is firmly but detachably mounted on the upper surface of the circular die.

In another preferred embodiment, the sealing ring is firmly but detachably mounted on the bottom surface of the press head.

In another preferred embodiment, the sealing ring is formed by a sealing circle with at least two clamping eyes. The clamping eyes are used for firm clamping the ring to the press die or to the press head, according to technical arrangement of the installation of this element.

In the following preferred embodiment, for anchoring the sealing ring to the upper surface of the press die, the clamping eyes are located on the lower inner circumference of the sealing circle or on the lower outer circumference of the sealing circle. The position of eyes or connecting elements must not be to the detriment of free rolling of the rolls on the upper surface of the press die.

In another preferred embodiment, for a technical solution with the sealing ring anchored to the lower surface of the press head, the clamping eyes are located on the upper inner circumference of the sealing circle
In another preferred embodiment, the inner diameter of sealing ring is larger than the outer diameter of the lower part of the press head, whereas its side profile copies in shape the outer shape of the profile of the press head.

In the following preferred embodiment, the sealing ring is in its upper part adjacent to the press head and / or in its lower part adjacent to the press die provided with a sealing element. In another preferred embodiment, the sealing ring is made of metal or plastic material and the sealing element is maximally abrasion-resistant and fire-resistant.

### Clarification of drawings

The invention in more detail will be explained by means of drawings:
- Fig.1: 3D side-view of the press head with three rolls rolling along a circular press die with sealing ring,
- Fig.2: perspective view of a separate sealing ring with clamping eyes.

### Examples of the Invention Embodiment

The basis of the granulating equipment is a granulating press **7** of known construction, provided with a drive unit. The drive unit can be represented by a powerful electric motor, but also by a combustion engine or other adequate type of drive. The purpose of the drive is to rotate the press head **4,** mounted directly or by means of a transmission gear to the drive shaft **8** of the drive.

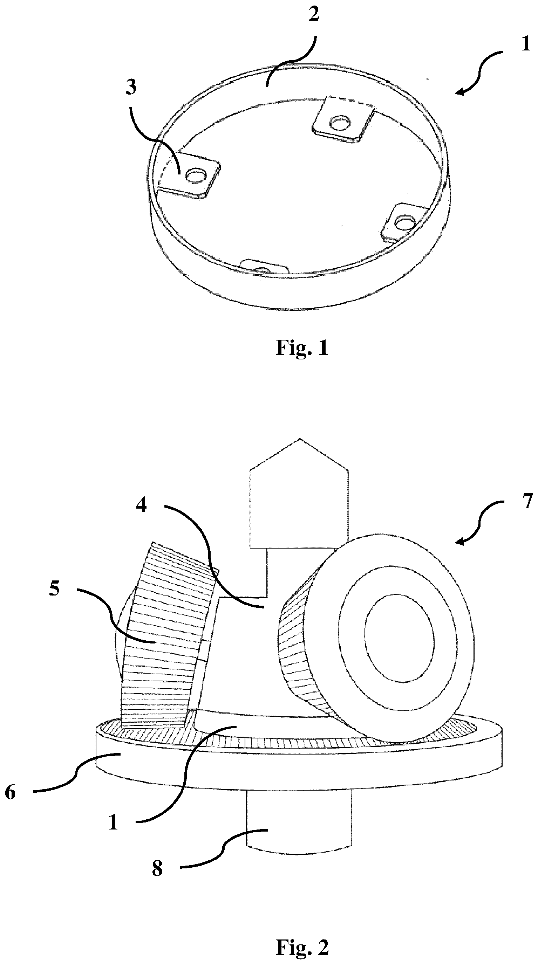

According to fig.2, the granulating press **7** consists of a press housing, in which a pressing and granulating set is situated. The set includes a press die **6,** circular in shape, representing the lower part of the granulating press **7,** firmly anchored in the housing of the granulating press **7.** The press die **6** is provided with a central hole through which the drive shaft **8** of the drive passes. On the drive shaft **8** of the drive, above the press die **6,** the press head **4** is mounted. The press head **4** rotates in the direction of the axis of rotation of the drive shaft **8** of the drive, whereas the rotation speed either corresponds to the rotation speed of the drive shaft **8,** or if a gearbox is used, the rotation speed is regulated by this gearbox. The press head **4** is provided with at least one, but optimally with up to three or four rollers **5.** These rollers **5** are mounted and anchored rotatably on shafts protruding from the sides of the press head **4.** The size of rollers **5** and their location is such, that during rotation of the press head **4** the rollers roll on the press die **6,** more precisely on the layer of the granulation material, supplied to the surface of the press die **6** by an inlet hopper. The granulation material is compressed by rollers **5,** wherewith they are rolling, and the greatest compression is achieved on the vertical, connecting the roller with the press die **6.** Here the granular material is pushed into the pressing holes located in the press die **6.** From the bottom side of the press die **6** a knife is rotatably arranged, cutting granules of the required length from a compressed monolithic column of the litter, where the shape of granules depends on the shape of the pressing hole. In the housing of the granulating press **7,** in the lower part under the press die **6,** an output hopper is located, through which the granules fall out of the granulating press **7.**

In order to prevent friction between the rotating and fixed parts of the granulating press **7,** a technological gap is made between the press head **4** and the press die **6.**
This technological gap represents for the known granulating presses **7** a technological problem, because rotation of the press die **6** does not work, material poured into this gap is compacted, becomes warm and in some cases even an ignition may occur.
According to this invention, the gap is covered by a sealing ring **1,** made to cover with certain overlap a part of the side cover of the press head **4,** fitting tightly to its sides and being at the same time firmly anchored with screws to the press die **6.** According to the shape of the press head **4,** the sealing circle **2** can take the shape of a truncated pyramid, cylinder, etc.

One of examples of the invention implementation according to fig.1 represents a cylindrical sealing ring **1** with four clamping eyes **3** of size 50 x 50 mm, located on the lower inner circumference of the sealing ring **1** provided with circular holes with a diameter of 20 mm for a clamping screw. In this exemplary design of technical solution, the inner diameter of the sealing ring **1** is 285 mm and the outer diameter is 295 mm. The height of the sealing ring **1** is 45 mm, the material of the ring 1 is steel with a diameter of 5 mm. The clamping eyes **3** are made of strip steel 5 mm wide and are attached to the sealing circle **2** by welding. The sealing ring **1** is screwed to the press die **6.**

In another exemplary design of the invention, the clamping eyes **3** are arranged on the lower outer circumference of the sealing ring **1,** to allow the rollers **5** to roll continuously over the press die **6.**

In another exemplary design of the invention, the clamping eyes **3** are located on the upper inner circumference of the sealing ring **1,** and the sealing ring **1** is firmly anchored to the lower edge of the press head **4** by means of screws.

In the following exemplary design of the invention, the inner diameter of the sealing ring **1** is larger than the outer diameter of the lower part of the press head **4,** whereas its side profile follows the outer shape of the profile of the press head **4.**

In another exemplary design of the invention is the sealing ring **1** in its upper part adjacent to the press head **4** and / or in its lower part adjacent to the press die **6** provided with a sealing element.

In another design of the invention, the sealing ring **1** is made of metal or plastic material.

### Industrial applicability

The invention finds use in granulating presses for the production of littered granular beddings for small domestic animals.

### List of reference specifications

- 1: sealing ring
- 2: sealing circle
- 3: clumping eye
- 4: press head
- 5: roller
- 6: press die
- 7: granulating press
- 8: drive shaft of the drive

## Claims

1. Granulating equipment for the production of animal bedding litter consisting of a drive unit and a granulating press (7), granulating press (7) consisting of a press housing, a hopper for granulation material, a hopper for discharging the formed granules, a press head (4) mounted on a rotating drive shaft (8) of a drive unit and passing through the centre of a circular press die (6) with pressing holes, the press head (4) being provided with at least one roller (5) rotatably mounted to the press head (4) and rolling on the upper surface of the circular press die (6), **characterized in that** in the space between the press head (4) and the press die (6) a sealing ring (1) is arranged, to eliminate penetration of pressed material into the space between the press die (6) and the press head (4).

2. Granulating equipment according to claim 1, **characterized in that** the sealing ring (1) is firmly mounted on the upper surface of the circular press die (6).

3. Granulating equipment according to claims 1 and 2, **characterized in that** the sealing ring (1) is firmly mounted on the lower surface of the press head (4).

4. Granulating equipment according to claims 1 to 3, **characterized in that** the sealing ring (1) consists of a sealing circle (2) and at least two clamping eyes (3), for firmly clamping the ring (1) to the press die (6) or to the press head (4).

5. Granulating equipment according to claim 4, **characterized in that** the clamping eyes (3) are located on the lower inner circumference of the sealing circle (2) or on the lower outer circumference of the sealing circle (2), for anchoring the sealing ring (1) to the upper surface of the press die (6).

6. Granulating equipment according to claim 4, **characterized in that** the clamping eyes (3) are located on the upper inner circumference of the sealing circle (2), for anchoring the sealing ring (1) to the lower surface of the press head (4).

7. Granulating equipment according to claims 1 to 6, **characterized in that** the sealing ring (1) has an inner diameter larger than the outer diameter of the lower part of the press head (4), and its side profile follows the outer shape of the profile of the press head (4).

8. Granulating equipment according to claims 1 to 7, **characterized in that** the sealing ring (1) is in its upper part adjacent to the press head (4) and / or in its lower part adjacent to the press die (6) provided with a sealing element.

9. Granulating equipment according to claims 1 to 8, **characterized in that** the sealing ring (1) is made of metal or plastic material.
